# EUROPEAN PATENT SPECIFICATION

(11) **EP 2 440 754 B1**
(45) Date of publication and mention of the grant of the patent: **17.04.2013**
(21) Application number: 10725409.6
(22) Date of filing: 04.06.2010
(51) Int. Cl.: F01L 7/10, F02B 27/04

(54) **Internal combustion engine with spherical rotary valve**
Verbrennungsmotor mit sphärischem Drehventil
Moteur à combustion interne avec une soupape rotative sphérique

(30) Priority: 08.06.2009 EP 09162176
(43) Date of publication of application: 18.04.2012
(73) Proprietor: Crosset, Léon, 4890 Thimister (BE)
(72) Inventor: Crosset, Léon, 4890 Thimister (BE)
(74) Representative: Connor, Marco Tom
(86) International application number: PCT/EP2010/057851
(87) International publication number: WO 2010/142613

(56) References cited:
- FR-A- 767 158
- GB-A- 560 581
- GB-A- 191 323 123
- US-A- 2 048 134
- US-A1- 2007 095 056
- US-B1- 7 328 680

## Description

### Field of the invention

The invention relates to internal combustion engines equipped with one or more spherical rotary valves.

### Background of the invention

There is a general trend to build internal combustion engines combining high specific power to keep the engine compact, with high efficiency to avoid fuel losses and air pollution. Such can be attained by enhancing the compression ratio, the valves tightness, the filling and emptying of the cylinders, etc. At the same time the reliability of the engine must be ensured.

### Description of prior art

The cylinders of conventional four stroke internal combustion engines have been for a long time equipped with only mushroom or poppet valves. However, the reciprocating motion of the valves is problematic at high revolutions because of their inertia which can lead to a synchronisation loss with the motor revolutions regime. Moreover, poppet valves induce important head losses, which is detrimental to a good cylinder filling.

Two stroke engines do not need any poppet valve as the exhaust outlet and the gas transfer inlets are located on the cylinder wall. The incomplete closure of the exhaust outlet while unburnt gas is being transferred into the combustion chamber, however, renders traditional two stroke engines particularly polluting.

Combinations of a poppet valve with one or more rotary valves were also considered as disclosed in DE 199 43 305 and GB 2 261 025. The aim was here to increase cylinder filling whilst keeping the combustion chamber tight during the compression and power strokes.

Further improvements led to the use of rotary valves alone as disclosed in GB 2 269 857 (Fig.16). The use of rotary valves in place of poppet valves can be advantageous since the rotary valves offer more favourable flow conditions of gases into and/or out of the combustion chamber. Furthermore, rotary valves are not speed limited in the same way as the spring loaded poppet valves. The rotary valves are here foreseen with a through gas passageway.

EP 0 551 504 discloses cylindrical rotary valves showing two curved channels which may join together at one end being in fluid communication with the combustion chamber. In case of a two stroke engine, the valves have then the same rotation speed as the engine, which avoids to provide cumbersome speed reducing means as in the case of the through passage of GB 2 269 857 (Fig.16). However, the irregular shape of the channels would cause important head losses detrimental to a good cylinder filling and/or emptying.

In the text below an axial flow rotary valve is defined as one in which the axis of rotation of the valve is substantially normal to the cylinder axis and the valve inlet duct for injecting fresh fuel & air into the combustion chamber for four stroke engines, or the outlet duct for releasing the exhaust gases are substantially parallel to said valve axis of rotation.

Better, axial flow conditions inside cylindrical rotary valves are disclosed in US 008078351, US 5315969 and

US 5052349. Moreover, from Fig. 7 of the latter document illustrating the power/exhaust stroke in a two stroke engine it can be seen that the absence of exhaust port in the cylinder wall enables the compression ratio to be increased. Nevertheless, cylindrical rotary valves turned out to be ineffective to seal the passage between the combustion chamber and the rotary valve.

US 20040107937, US 6666458 and DE 4027311 relate to spherical non axial flow rotary valves sitting on sealing means to seal the passage between the combustion chamber and the rotary valve, thereby providing a better tightness at said passage than cylindrical valves.

US 7328680 discloses spherical axial flow rotary valves combining compactness, favourable flow conditions and sealing characteristics. Here again, as for cylindrical valves, the curved channel opening on an axis parallel to the valve rotational axis is advantageous for the coordination between valve and engine rotary speeds. Each valve is supported on one of its sides on an axle received in an axle race, and on its other side on a support sleeve received in a race and being in gaseous communication with a manifold. However, the sleeve of the exhaust valve undergoes the hot temperature of the exhaust gases and may thus jam due to its thermal expansion in its race.

DE 4017819 relates to an axial flow spherical rotary valve with combined intake and exhaust, which is supported on both its intake and exhaust sides on bearings. The construction described therein of holding the sphere with bearings on both sides thereof is the commonly used in all spherical valves. In the case of a curved channel, however, this construction is problematic, since on the exhaust side of the valve, the bearings are fixed to a hollow axle carrying combusted gases into the exhaust duct. The temperature of the exhaust axle may vary from ambient when the engine is started, to several hundreds degrees when the engine has been running for a long time, thus generating large thermal expansions, impossible to be accommodated by the bearings. The presence of beatings around the exhaust axle is thus detrimental to the operational reliability of the rotary valve as they may jam due to the thermal expansion of the valve hollow exhaust axle.

US2048134 discloses a two stroke internal combustion engine comprising a rotary valve. The cylindrical body of said rotary valve comprises an inlet passage for delivery of the fresh charge or the air to the combustion chamber and an exhaust passage for discharging the products of combustion. Upon one rotation, fresh fuel and air is injected into the combustion chamber through the inlet passage and the combustion gases generated by the combustion are exhausted though the exhaust passage as the valve continues its rotation.

There remains thus a need for an internal combustion engine combining high specific power with high efficiency, whilst being fully reliable, even at high revolutions regimes and after long times of running.

### Summary of the invention

The object of the invention is to provide an internal combustion engine of simple and cheap construction, delivering a high specific power coupled with high efficiency and reliability. The present invention is defined in the appended independent claims. Preferred embodiments are defined in the dependent claims.

In particular, the present invention concerns an internal combustion engine having at least one cylinder housing containing a reciprocally movable piston along the central axis of revolution thereof, and a combustion chamber on top of said piston, and a cylinder head assembly comprising a cavity in fluid communication with said combustion chamber, and at least a first rotary valve nested, in said cavity, said valve,
- having a substantially spherical body defining a central axis of rotation normal to the cylinder central axis and
- comprising a passageway there through to bring the combustion chamber into intermittent fluid communication with an exhaust duct for evacuating the burnt gases, said passageway comprising a 90 deg bend and connecting:
- a first opening to the exhaust duct substantially parallel to, preferably coaxial with the valve central axis of rotation, to
- a second opening, such that by rotation of the valve round its axis of rotation, said second opening can be intermittently brought into fluid communication with the combustion chamber, and further comprising
- a shaft fixed to the valve and coaxial with the valve central axis of rotation and located opposite the exhaust duct, said shaft comprising connecting means to a drive for rotating the valve in correspondence with the operating strokes of the piston in the cylinder, and wherein,
- the valve is rotatably mounted within the cylinder head assembly through one or several bearings, all exclusively mounted on said shaft such that the valve is mounted in cantilever on its shaft.
wherein, transfer ports are distributed around the whole circumference of the cylinder wall just above the piston top when it is located at its lowest position, said transfer ports bringing in fluid communication transfer ducts with said combustion chamber.

The use of such axial flow spherical rotary valves is advantageous in many respects. It offers better flowing conditions and thus better cylinder filling/emptying conditions. As the movement of a rotary valve is continuous and not reciprocal as is the case with a poppet valve, it may run at higher revolutions than the latter. The sealing between the valve and the combustion chamber is easier to ensure, than with cylindrical rotary valves, thus maintaining higher levels of compression. Moreover, in case of two stroke engines the use of a spherical exhaust valve allows to get rid of the exhaust opening on the cylinder wall of conventional engines, thus permitting to reduce the number of ports on the cylinder wall and hence to increase the compression stroke and the compression ratio, thus yielding a higher engine efficiency.

The gist of the invention is to distribute the transfer ports around the whole circumference of the cylinder wall and to rotatably mount the valve in cantilever on a shaft on one side only of the valve, the one opposite the exhaust duct, to avoid extreme thermal variations and thus thermal expansion of the exhaust shaft, which would jam the bearings of the rotary valves of the prior art.

Various embodiments of the claimed invention are envisaged and explained more in details in the following.

### Short description of the drawings

These and further aspects of the invention will be explained in greater detail by way of example and with reference to the accompanying drawings wherein:
- Fig. 1: is a transverse cut of a two-stroke engine according to the present invention;
- Fig. 2: is transverse cut of a four-stroke engine using two rotary valves as described herein (not belonging to the present invention)

- Fig.3: is a transverse cut of a rotary valve mounted in cantilever within the cylinder head of the present invention;
- Fig. 4: is a three-dimensional view of the valve of Figure 3.
- Fig. 5a: is a schematic cut view of a two-stroke engine of the prior art.
- Fig. 5b: is a schematic cut view of a two-stroke engine of the invention corresponding to that of Fig.5a.
- Fig. 6: is a schematic comparative cut view shewing the advantages in terns of pro-compression of a two-stoke engine of the invention over a conventional one.

The figures are not drawn to scale. Generally, identical components are denoted by the same reference numerals in the figures.

### Detailed description of preferred embodiments

The cylinder head assembly (2) suitable for the present invention is to be located on top of at least one cylinder housing containing a reciprocally movable piston (4) along the central axis of revolution thereof. A combustion chamber (3) is defined by the volume defined by the cylinder lateral walls, the top of said piston, and the top wall of the cylinder, the latter being in fluid communication with the cylinder head (2). The cylinder head assembly (2) comprises at least a first rotary 'exhaust valve' (5) in fluid communication with said combustion chamber (3) and an exhaust duct (10). The cylinder head assembly (2) of the present invention may also comprise an 'injection valve' in fluid communication with a fuel & air injection line (20). Injection valves are useful for four-stroke engines only, whilst exhaust valves can be used in both two- and four-stroke engines. It is essential to the present invention that the claimed assembly comprises at least one exhaust rotary valve as described hereinbelow.

The rotary valve (5) has a substantially spherical body defining a central axis of rotation normal to the cylinder central axis. It also comprises a passageway (6) therethrough in fluid communication between the combustion chamber and an exhaust duct (10) for evacuating the burnt gases. Said passageway (6) comprises a 90 deg bend and connects:
- a first opening (31) to the exhaust duct substantially parallel to, preferably coaxial with the valve central axis of rotation, to
- a second opening (30), such that by rotation of the valve (5) round its axis of rotation, said second opening can be intermittently brought into fluid communication with the combustion chamber.

The valve (5) also comprises a shaft (7) fixed to the valve and coaxial with the valve central axis of rotation and located opposite the exhaust duct (10), said shaft comprising connecting means to a drive for rotating the valve in correspondence to the operating strokes of the piston in the cylinder. The shaft (7) is used to rotatably mount the valve within the cylinder head assembly through one or several bearings (8). In order to avoid any problem related with thermal expansion of the side of the valve exposed to the exhausted gases, the valve is mounted in cantilever with the bearings (8) are all exclusively mounted around said shaft (7). This is highly advantageous over known designs because the shaft temperature does not vary substantially during the running of the engine, whilst the exhaust duct side of the valve (5) is exposed to wide temperature variations and, hence, to substantial thermal expansion.

In a preferred embodiment, the valve first passageway opening (31) to the exhaust duct (10) is provided with a beak (9) jutting out of the sphere's wall and engaging into an inlet section of the exhaust duct (10) having a complementary geometry such that the burnt gases leaving the passageway's beak undergo a venturi effect preventing them from flowing backwards into the circumferential gap between the beak and the inlet section of the exhaust duct. This simple solution ensures that substantially all the exhausted gases are led into the exhaust duct.

In order to ensure gas tightness of the valve, it preferably sits snugly on sealing means to seal the passage between the combustion chamber and the rotary valve. Belleville type washers are particularly suitable for this purpose. The simplicity and efficacy of the sealing of spherical valves makes them particularly advantageous over cylindrical valves.

Similarly, the passage between the shaft (7) and the cylinder head cavity (5A) may also be provided with sealing means (13); here again Belleville type washers are particularly suitable.

The valve (5) is mounted in cantilever on shaft (7) through at least one bearing (8). In order to further ensure the valve stability on its axis upon rotation thereof, it is advantageous to use at least two bearings (8) to support shaft (7) at two different positions. The use of more bearings is of course possible. Any type of bearings suitable for rotatably supporting valve (5) may be used and their specific type is not critical to the present invention.

The through passage (6) across the valve body, fluidly connecting the first opening (31) to the second opening (30) may have a constant cross-section on both sides of the bend. It is preferred, however, that the second opening (30) intermittently facing the passage from The cylinder head assembly (2) to the combustion chamber (3) have a larger cross-section than the first opening (30) to the exhaust duct. This allows the exhaust of burnt gases to take place for a longer time at a constant revolution rate, or to ensure a sufficient time for exhausting gases at higher revolution rates of the engine. To this effect, it is preferred if the second opening (30) be elongated in the direction of valve rotation; for example it may be an ellipse with its short axis parallel to the rotation axis of the valve and its long axis normal thereto. It is also possible to offset the opening with respect to the axis of rotation of the valve. This is particularly advantageous when more than one rotational valve is used and their respective angular positions on the shaft must be optimized for capturing the remaining burnt gases, without opening the passage too soon.

The present invention concerns internal combustion engines comprising a cylinder head assembly as described in the previous section. An internal combustion engine is characterized by at least one cylinder housing containing a reciprocally movable piston along the central axis of revolution thereof, and a combustion chamber (3) enclosed between the cylinder lateral wall, the top surface of the piston, and the top wall of the cylinder. The top wall of the cylinder is open to bring in fluid communication said combustion chamber with a cylinder head assembly located on top of the cylinder. The cylinder head assembly (2) comprises at least one rotary valve (5) as described in the previous section. Upon rotation of the rotary valve (5), the second opening (30) is brought intermittently in fluid communication with the combustion chamber (3). The rotation speed of the valve must be synchronized with the motion of the piston. In a four-stroke engine the exhaust valve (5) brings every second stroke the combustion chamber (3) into fluid communication with the exhaust duct (10) when the piston is moving up the cylinder to push the burnt gases out of the cylinder. In two-stroke engines, however, this happens once every stroke and the fluid communication between the combustion chamber (3) and the exhaust duct (10) should only last a fraction of the ascension time of the piston. In the present context, the expressions "piston roving up/down the cylinder", "ascension/descent/ and their derivatives mean reducing/increasing, respectively, the volume of the combustion chamber regardless of the actual orientation of the cylinder in space, and regardless of whether the piston is really moving vertically up or down with respect to the earth.

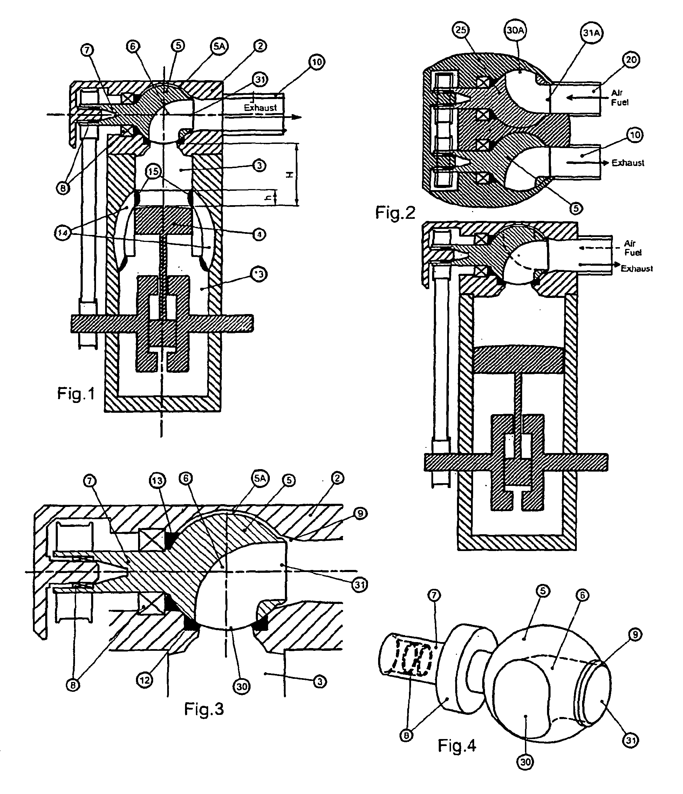

Traditional two-stroke engines usually do not need any valve. As shown in Figure 1, the fuel & air mixture is injected in the lower part (13) of the engine, below the piston. Transfer ducts (14) fluidly connect the lower part of the engine to the combustion chamber opening therein through transfer ports (15) located round the wall of the cylinder, at a level just above the piston top when it is located at its lowest position. When the piston runs down the cylinder, it compresses the fuel & air mixture present in the lower part of the engine and frees the passage of the transfer ports (15) allowing pre-compressed fuel & air to be transferred into the combustion chamber. As the piston runs up the cylinder, the fuel mixture is further compressed and ignited with a sparking plug (not shown) whilst fresh fuel & air mixture is injected into the lower part of the engine. The explosion drives the piston down the cylinder and the cycle is repeated. The hot, burnt gases must be ejected out of the cylinder. The exhaust valve (5) allows the evacuation of the burnt gases by bringing in fluid communication the combustion chamber with the exhaust duct, at the beginning of the rise of the piston, when fresh fuel mixture is transferred from the lower engine to the combustion chamber. The combined effects of the rising piston, transfer of fresh fuel mixture, and heat of the burnt gases all contribute to the effective evacuation of the burnt gases through opening (30), passageway (6), opening (31) and exhaust duct (10).

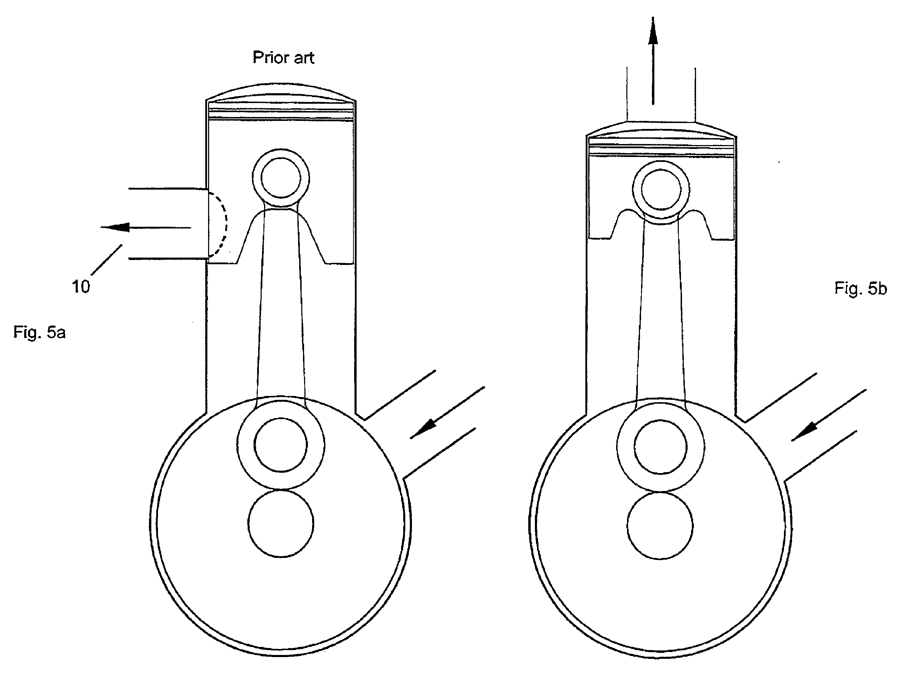

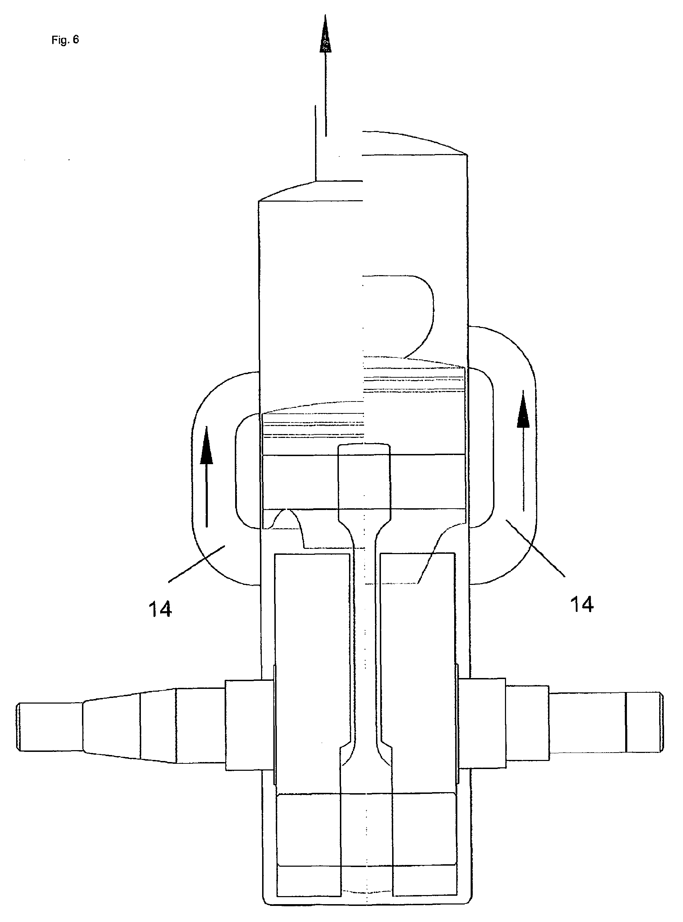

In conventional two-stroke engines, the exhaust duct opens on a lateral wall of the cylinder and extends up to a given height thereof. The volume of the cylinder corresponding to the lateral wall height comprising openings for the transfer ports (15) and the exhaust duct is wasted in terms of compression. With the present invention, the exhaust duct (10) does not open on the lateral wall of the cylinder anymore, but is located on top of it. This is highly advantageous because the hot gases naturally go up, and the volume fraction of the cylinder where compression can build up is thus increased.
Another advantage, in terms of piston height, can be deduced from Fig.5a and 5b. As it is showed on Fig. 5a, the piston height in a traditional two-stroke engine must be larger than the piston stroke to seal the opening to the exhaust duct (10) in the lateral cylinder wall during the whole upward fuel mixture suction stroke of the piston up to its top dead centre. As this exhaust opening is not longer needed in the present invention (Fig.5b), the piston height may be reduced to a value inferior to the stroke, thereby decreasing the piston weight, inertia, costs etc. Preferably, the piston height should be as small as possible for mechanical reasons such as increased piston acceleration and speed, increased revolutions per minute (RPM) etc. The piston height reduction involves also advantages regarding the increase in pre-compression of the fuel mixture. As it can be seen from Fig. 6 showing a juxtaposition of half sections of the shortened piston of a two-stroke engine of the invention (left) and the (larger) piston of a traditional equivalent one (right) in their bottom dead centre, the shorter piston drives the same amount of fuel mixture within smaller volumes both in the engine bottom and in the shortened transfer ducts (14). The so obtained increase of the pre-compression of the fuel mixture enhances its flow rate to the cylinder and hence the filling of the latter. A better filling of the cylinder leads to several advantages such as a higher compression of the fuel mixture, a better evacuation of the exhaust gases and a higher mechanical energy output per volume unit.

Furthermore, the transfer ports are distributed around the whole circumference of the lateral cylinder wall. It is possible to distribute as many as at least five transfer ducts, preferably at least six transfer ducts around the cylinder lateral wall. Increasing the number of ports allows their height (h) to be substantially reduced for a same total port area. With the present invention it is possible to design the transfer ports so that they extend over not more than a quarter of the total height of the combustion chamber when the piston is at its lowest position (i.e., h / H ≤ 1 / 4).

To further enhance the evacuation of the burnt gases, whilst ensuring that the fresh fuel mixture remains in the cylinder (one of two-stroke engines most recurrent problems), it is advantageous to orient the transfer ducts (14) so that the fuel mixture is transferred into the cylinder following a trajectory comprising a component tangential to the cylinder wall. This geometry imparts a spinning movement to the combustion fluid injected into the cylinder, which pushes further up the burnt gases which are thus more efficiently evacuated through the top of the cylinder and valve (5).

In four-stroke engines, a valve is required to evacuate the exhaust gases and a second valve to inject a fresh mixture of fuel and air. The present invention also encompasses four-stroke engines comprising a cylinder head assembly having at least one rotary exhaust valve as described above. The advantages of rotary valves over poppet valves, in particular at high revolution regimes can advantageously be obtained by using an injection rotary valve as described above.

## Claims

1. Two stroke internal combustion engine comprising:
(a) at least one cylinder housing comprising,
• a reciprocally movable piston (4) along the central axis of revolution thereof, and
• a combustion chamber (3) on the top of said cylinder,
(b) a cylinder head assembly (2) comprising a cavity (5A) in fluid communication with said combustion chamber (3), and at least a first rotary valve (5) nested in said cavity (5A), said valve,
• having a substantially spherical body defining a central axis of rotation normal to the cylinder central axis and
• comprising a passageway therethrough to bring the combustion chamber into intermittent fluid communication with an exhaust duct for evacuating the burnt gases, said passageway comprising a 90 deg bend connecting:
○ a first opening (31) to the exhaust duct substantially parallel to, preferably coaxial with the valve central axis of rotation, to
○ a second opening (30), such that by rotation of the valve round its axis of rotation, said second opening (30) can be intermittently brought into fluid communication with the combustion chamber (3), and further comprising
• a shaft (7) fixed to the valve and coaxial with the valve central axis of rotation and located opposite the exhaust duct (10), said shaft comprising connecting means to a drive for rotating the valve in correspondence with the operating strokes of the piston in the cylinder,
• the valve being rotatably mounted in cantilever within the cylinder head assembly through one or several bearings (8), all exclusively mounted around said shaft (7).
**characterized in that**, transfer ports (15) are distributed around the whole circumference of the cylinder wall just above the piston top when it is located at its lowest position, said transfer ports bringing in fluid communication transfer ducts (14) with said combustion chamber (3).

2. Internal combustion engine according to claim 1, wherein said first passageway opening (31) to the exhaust duct (10) is provided with a beak (9) jutting out of the sphere's wall and engaging into an inlet section of the exhaust duct (10) having a complementary geometry such that the burnt gases leaving the passageway's beak undergo a venturi effect preventing them from flowing backwards into the circumferential gap between the beak and the inlet section of the exhaust duct.

3. Internal combustion engine according to claim 1 or 2, wherein the rotary valve (5) sits on sealing means (12) to seal the passage between the combustion chamber and the rotary valve, said sealing means comprising a Belleville type washer.

4. Internal combustion engine according to any of the preceding claims, wherein the rotary valve comprises sealing means (13) to seal the passage between the shaft (7) and the cavity (5A), said sealing means preferably comprising a Belleville type washer.

5. Internal combustion engine according to any of the preceding claims, wherein the rotary valve (5) is mounted within the cylinder head assembly through at least two bearings (8).

6. Internal combustion engine according to any of the preceding claims, wherein the second opening (30) to the combustion chamber is larger than the first opening (31) to the exhaust duct (10), the second opening (30) being preferably elongated in the direction of rotation, most preferably, the second opening (30) being offset with respect to the valve central axis of rotation.

7. Internal combustion engine according to any of the preceding claims, wherein the transfer ports (15) have a tangential component with respect to the cylinder circumference such as to impart a spinning movement to the combustion fluid injected into the cylinder.

8. Internal combustion engine according to any of the preceding claims, wherein the transfer ports (15) extend over not more than a quarter of the total height of the combustion chamber when the piston is at its lowest position.

9. Internal combustion engine according to any of the preceding claims, comprising at least five transfer ducts, preferably at least six transfer ducts (14) in fluid communication with the corresponding transfer ports.

## Patentansprüche

1. Zweitakt-Verbrennungsmotor, umfassend:
(a) mindestens ein Zylindergehäuse, umfassend
• einen wechselseitig beweglichen Kolben (4) entlang der Zentraldrehachse davon, und
• eine Verbrennungskammer (3) auf der Oberseite des Zylinders,
(b) eine Zylinderkopfanordnung (2), umfassend einen Hohlraum (5A) in Fluidverbindung mit
der Verbrennungskammer (3) und mindestens ein erstes Drehventil (5), das in dem Hohlraum (5A) angeordnet ist, wobei das Ventil
• einen im Wesentlichen kugelförmigen Körper aufweist, der eine Zentraldrehachse definiert, die senkrecht zu der Zylinderzentralachse ist, und
• umfassend einen Durchgang dadurch, um die Verbrennungskammer in eine diskontinuierliche Fluidverbindung mit einer Abgasleitung zu bringen, um die verbrannten Gase zu evakuieren, wobei der Durchgang eine 90-Grad-Kurve umfasst, die Folgendes verbindet:
• eine erste Öffnung (31) mit der Abgasleitung, die im Wesentlichen parallel zu, vorzugsweise koaxial zu der Ventilzentraldrehachse ist,
• eine zweite Öffnung (30), sodass durch Drehen des Ventils um seine Drehachse die zweite Öffnung (30) diskontinuierlich in Fluidverbindung mit der Verbrennungskammer (3) gebracht werden kann, und ferner umfassend
• eine Welle (7), die an dem Ventil befestigt ist und koaxial zu der Ventilzentraldrehachse verläuft und gegenüber der Abgasleitung (10) angeordnet ist, wobei die Welle Verbindungsmittel mit einem Antrieb zum Drehen des Ventils entsprechend der Arbeitstakte des Kolbens in dem Zylinder umfasst,
• das Ventil drehbar in einem Ausleger innerhalb der Zylinderkopfanordnung durch einen oder mehrere Lager (8) montiert ist, wobei sämtliche ausschließlich um die Welle (7) montiert sind,
**dadurch gekennzeichnet, dass** die Transferanschlüsse (15) um den gesamten Umfang der Zylinderwand genau über der Kolbenoberseite verteilt sind, wenn dieser in seiner untersten Position angeordnet ist, wobei die Transferanschlüsse die Transferleitungen (14) mit der Verbrennungskammer (3) in Fluidverbindung bringen.

2. Verbrennungsmotor nach Anspruch 1, wobei die erste Durchgangsöffnung (31) zu der Abgasleitung (10) mit einem Schnabel (9) bereitgestellt ist, der aus der Kugelwand herausragt und mit einem Einlassabschnitt der Abgasleitung (10) in Eingriff tritt, der eine ergänzende Geometrie aufweist, sodass die verbrannten Gase, die den Schnabel des Durchgangs verlassen, einem Venturi-Effekt unterzogen werden, wodurch verhindert wird, dass diese zurück in den Umfangsspalt zwischen dem Schnabel und dem Einlassabschnitt der Abgasleitung strömen.

3. Verbrennungsmotor nach Anspruch 1 oder 2, wobei das Drehventil (5) auf Dichtungsmitteln (12) eingepasst ist, um den Durchgang zwischen der Verbrennungskammer und dem Drehventil abzudichten, wobei die Dichtungsmittel eine Tellerfeder umfassen.

4. Verbrennungsmotor nach einem der vorherigen Ansprüche, wobei das Drehventil Dichtungsmittel (13) zum Abdichten des Durchgangs zwischen der Welle (7) und dem Hohlraum (5A) umfasst, wobei die Dichtungsmittel vorzugsweise eine Tellerfeder umfassen.

5. Verbrennungsmotor nach einem der vorherigen Ansprüche, wobei das Drehventil (5) durch mindestens zwei Lager (8) in der Zylinderkopfanordnung montiert ist.

6. Verbrennungsmotor nach einem der vorherigen Ansprüche, wobei die zweite Öffnung (30) zu der Verbrennungskammer größer ist als die erste Öffnung (31) zu der Abgasleitung (10), wobei die zweite Öffnung (30) vorzugsweise in Drehrichtung verlängert ist, wobei die zweite Öffnung (30) am meisten bevorzugt in Bezug auf die Ventilzentraldrehachse versetzt ist.

7. Verbrennungsmotor nach einem der vorherigen Ansprüche, wobei die Transferanschlüsse (15) eine tangentiale Komponente in Bezug auf den Zylinderumfang aufweisen, um eine Kreiselbewegung des Verbrennungsfluids zu bewirken, das in den Zylinder eingespritzt wird.

8. Verbrennungsmotor nach einem der vorherigen Ansprüche, wobei sich die Transferanschlüsse (15) über nicht mehr als ein Viertel der Gesamthöhe der Verbrennungskammer erstrecken, wenn sich der Kolben an seiner untersten Position befindet.

9. Verbrennungsmotor nach einem der vorherigen Ansprüche, umfassend mindestens fünf Transferleitungen, vorzugsweise mindestens sechs Transferleitungen (14) in Fluidverbindung mit den entsprechenden Transferanschlüssen.

## Revendications

1. Moteur à combustion interne à deux temps comprenant :
(a) au moins un corps de cylindre comprenant
• un piston (4) mobile par va-et-vient le long de l'axe central de révolution dudit piston, et
• une chambre de combustion (3) placée sur le dessus dudit cylindre,
(b) un ensemble de tête de cylindre (2) comprenant une cavité (5A) en communication fluidique avec ladite chambre de combustion (3), et au moins une première valve rotative (5) logée dans ladite cavité (5A), ladite valve
• ayant un corps sensiblement sphérique définissant un axe central de rotation, normal par rapport à l'axe central du cylindre, et
• comprenant un passage traversant le corps de la valve, pour placer la chambre de combustion en communication fluidique intermittente avec un conduit d'échappement pour évacuer les gaz brûlés, ledit passage comprenant un coude à 90 degrés reliant :
○ une première ouverture (31) au conduit d'échappement sensiblement parallèle à l'axe central de rotation de la valve, de préférence disposé de façon coaxiale par rapport audit axe de rotation, à
○ une deuxième ouverture (30), de manière telle, que par rotation de la valve autour de son axe de rotation, ladite deuxième ouverture (30) puisse être placée, de façon intermittente, en communication fluidique avec la chambre de combustion (3), et comprenant en outre
• un arbre (7) fixé sur la valve et disposé de façon coaxiale par rapport à l'axe central de rotation de la valve et situé à l'opposé du conduit d'échappement (10), ledit arbre comprenant des moyens d'accouplement à une transmission, pour faire tourner la valve en correspondance avec les courses fonctionnelles du piston dans le cylindre,
• la valve étant montée en rotation, en porte-à-faux à l'intérieur de l'ensemble de tête du cylindre, par un ou plusieurs paliers (8), tous étant montés exclusivement autour dudit arbre (7),
**caractérisé en ce que** des orifices de transfert (15) sont répartis autour de toute la circonférence de la paroi du cylindre, juste au-dessus de la partie supérieure du piston quand elle est placée au niveau de sa position la plus basse, lesdits orifices de transfert plaçant des conduits de transfert (14) en communication fluidique avec ladite chambre de combustion (3).

2. Moteur à combustion interne selon la revendication 1, dans lequel ladite première ouverture de passage (31) reliée au conduit d'échappement (10) est dotée d'un bec (9) faisant saillie par rapport à la paroi de la sphère et s'engageant dans une section d'entrée du conduit d'échappement (10) ayant une géométrie complémentaire telle, que les gaz brûlés sortant du bec du passage subissent un effet venturi les empêchant de s'écouler vers l'arrière, dans l'espace circonférentiel formé entre le bec et la section d'entrée du conduit d'échappement.

3. Moteur à combustion interne selon la revendication 1 ou 2, dans lequel la valve rotative (5) est positionnée sur le moyen d'étanchéité (12), pour assurer l'étanchéité du passage entre la chambre de combustion et la valve rotative, ledit moyen d'étanchéité comprenant une rondelle de type Belleville.

4. Moteur à combustion interne selon l'une quelconque des revendications précédentes, dans lequel la valve rotative comprend un moyen d'étanchéité (13), pour assurer l'étanchéité du passage entre l'arbre (7) et la cavité (5A), ledit moyen d'étanchéité comprenant de préférence une rondelle de type Belleville.

5. Moteur à combustion interne selon l'une quelconque des revendications précédentes, dans lequel la valve rotative (5) est montée à l'intérieur de l'ensemble de tête du cylindre, par au moins deux paliers (8).

6. Moteur à combustion interne selon l'une quelconque des revendications précédentes, dans lequel la deuxième ouverture (30) reliée à la chambre de combustion est plus grande que la première ouverture (31) reliée au conduit d'échappement (10), la deuxième ouverture (30) étant de préférence de forme allongée dans la direction de rotation, la deuxième ouverture (30) étant, de façon la plus préférable, décalée par rapport à l'axe central de rotation de la valve.

7. Moteur à combustion interne selon l'une quelconque des revendications précédentes, dans lequel les orifices de transfert (15) ont un composant tangentiel par rapport à la circonférence du cylindre, de manière à donner un mouvement de rotation rapide, au fluide de combustion injecté à l'intérieur du cylindre.

8. Moteur à combustion interne selon l'une quelconque des revendications précédentes, dans lequel les orifices de transfert (15) ne s'étendent pas sur plus d'un quart de la hauteur totale de la chambre de combustion, quand le piston est au niveau de sa position la plus basse.

9. Moteur à combustion interne selon l'une quelconque des revendications précédentes, comprenant au moins cinq conduits de transfert, de préférence au moins six conduits de transfert (14) en communication fluidique avec les orifices de transfert correspondants.
